# EUROPÄISCHE PATENTSCHRIFT

(11) **EP 0 903 007 B1**
(45) Veröffentlichungstag und Bekanntmachung des Hinweises auf die Patenterteilung: **31.10.2001**
(21) Anmeldenummer: 97927120.2
(22) Anmeldetag: 03.06.1997
(51) Int. Cl.: H02P 6/00, H02P 6/24

(54) **ANORDNUNG MIT EINEM ELEKTRONISCH KOMMUTIERTEN MOTOR**
ARRANGEMENT WITH AN ELECTRONICALLY COMMUTATED MOTOR
SYSTEME COMPORTANT UN MOTEUR A COMMUTATION ELECTRONIQUE

(30) Priorität: 07.06.1996 DE 29610084 U
(43) Veröffentlichungstag der Anmeldung: 24.03.1999
(73) Patentinhaber: PAPST-MOTOREN GMBH & CO. KG, 78112 St Georgen (DE)
(72) Erfinder: KARWATH, Arno, D-78628 Rottweil (DE)
(86) Internationale Anmeldenummer: EP9702878
(87) Internationale Veröffentlichungsnummer: WO9748177

(56) Entgegenhaltungen:
- EP-A- 0 318 938
- EP-A- 0 467 085
- EP-A- 0 685 925
- DE-A- 4 305 767

## Beschreibung

Die Erfindung betrifft eine Anordnung mit einem elektronisch kommutierten Motor, welcher einen permanentmagnetischen Rotor aufweist und im Betrieb aus einem Wechselstromnetz über einen an dieses Wechselstromnetz angeschlossenen Gleichrichter und einen an diesen Gleichrichter angeschlossenen Gleichstrom-Zwischenkreis mit einer Gleichspannung versorgt wird.

Derartige Motoren sind bekannt aus der EP 0 467 085 A1 oder dem DE-UM 9 414 498.2. Bei diesen Motoren muß deren Elektronik über ein eigenes Netzteil aus dem Wechselspannungsnetz mit einer geeigneten Niederspannung versorgt werden, z.B. mit einer Gleichspannung von 5 oder 12 V.

Dabei ergibt sich das Problem, daß bei einer kurzen Unterbrechung der Netzspannung, oder nach dem Abschalten eines solchen elektronisch kommutierten Motors, dessen Elektronik rasch stromlos wird und daher erratische Schaltzustände annehmen kann, während der Motor selbst noch rotiert und dabei Energie in den Gleichstrom-Zwischenkreis zurückliefert. Dies kann zur Zerstörung elektronischer Bauteile des Motors führen, besonders bei Motoren, die über eine Vollbrückenschaltung mit Strom versorgt werden.

Deshalb ist es eine Aufgabe der Erfindung, eine neue Anordnung mit einem elektronisch kommutierten Motor bereitzustellen.

Nach der Erfindung wird diese Aufgabe gelöst durch den Gegenstand des Patentanspruchs 1. Man erreicht so, daß direkt nach dem Einschalten des Motors, ebenso nach dem Abschalten des Motors, oder nach einem Stromausfall, die Elektronik des Motors über den Längsregler aus dem Gleichstrom-Zwischenkreis mit Energie versorgt wird, so daß die Kommutierung des Motors bis herunter zu niedrigen Drehzahlen sicher gewährleistet ist und der Motor problemlos den Stillstand erreicht. Dabei wird der Längsregler nur dann aktiviert, wenn die Spannung am genannten Ausgang nicht mehr ausreichend hoch ist, so daß unnötige elektrische Verluste im Längsregler vermieden werden und sich ein guter Wirkungsgrad des Motors ergibt.

Eine sehr einfache Ausgestaltung der Erfindung ergibt sich durch den Gegenstand des Anspruchs 4.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den übrigen Unteransprüchen. Es zeigt:
- Fig. 1: ein Blockschaltbild einer erfindungsgemäßen Anordnung,
- Fig. 2: eine Darstellung analog Fig. 1, aber mit zusätzlichen Details der Schaltung, und
- Fig. 3: eine Darstellung eines mittels einer Vollbrückenschaltung (H-Brücke) betriebenen elektronisch kommutierten Motors.

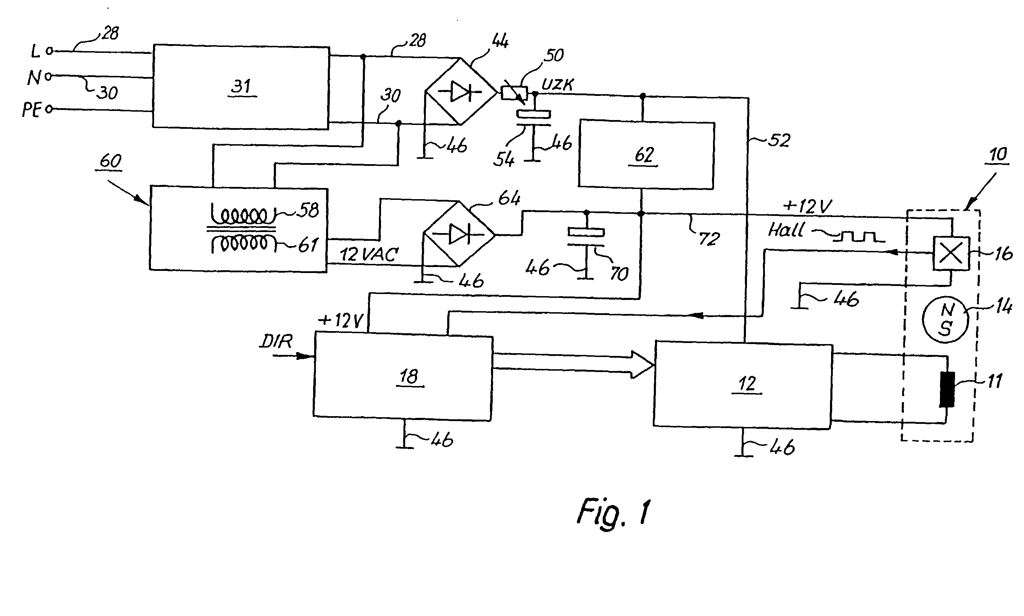

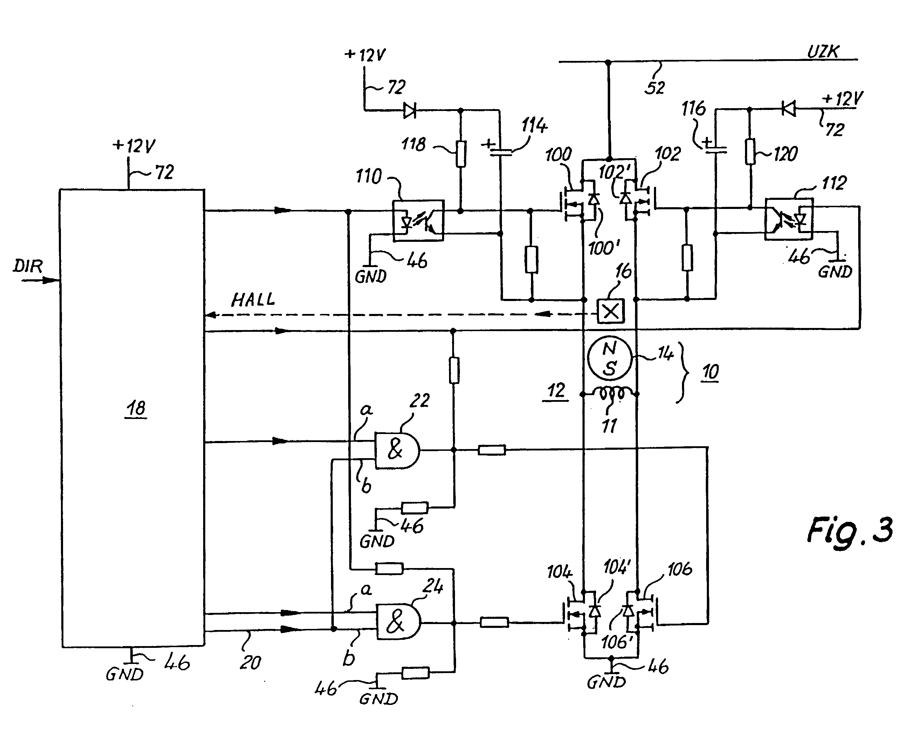

Fig. 1 zeigt eine erfindungsgemäße Anordnung in Form eines Blockschaltbilds. Diese enthält einen elektronisch kommutierten Motor (ECM) 10, der hier mit einem einzigen Wicklungsstrang 11 dargestellt ist und über eine Endstufe 12 (Vollbrückenschaltung; vgl. Fig. 3) mit Strom versorgt wird. Der Motor 10 hat einen permanentmagnetischen Rotor 14, der hier sehr schematisch als zweipoliger Rotor dargestellt und in dessen Nähe ein Rotorstellungssensor 16 angeordnet ist, gewöhnlich ein Hallgenerator (Hall-IC). Der Rotorstellungssensor 16 wird mit einer niedrigen Gleichspannung von z.B. 12 V versorgt und liefert dann ein digitales Ausgangssignal Hall zu einer Kommutierungssteuerung 18. Diese benötigt für ihren Betrieb ebenfalls diese niedrige Gleichspannung von z.B. 12 V. Der Kommutierungssteuerung 18 kann z.B. ein Signal DIR zugeführt werden, das die Drehrichtung des Motors 10 steuert, und gemäß Fig. 3 kann sie an ihrem Ausgang 20 ein Signal abgeben, mit dem sie über zwei UND-Glieder 22, 24 die Stromversorgung des Motors 10 unterbricht, z.B., um dessen Drehzahl zu regeln oder dessen Strom zu begrenzen.

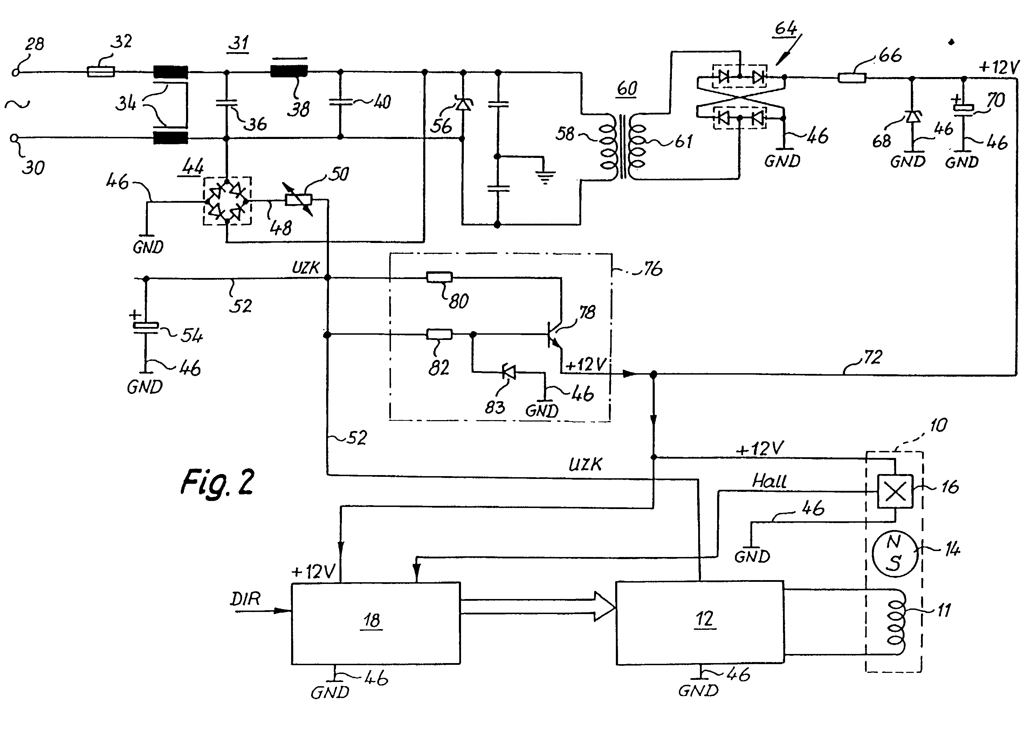

Die in Fig. 1 dargestellte Anordnung wird aus einem Wechselstromnetz gespeist, an das sie mittels zweier Anschlüsse 28, 30 angeschlossen werden kann. Mit PE ist eine Masseanschluß des Wechselstromnetzes bezeichnet. Der Anschluß erfolgt über ein Filter 31. Gemäß Fig. 2 enthält dieses eine Sicherung 32, eine Drossel 34, einen Filterkondensator 36, eine zweite Drossel 38, und einen Filterkondensator 40. Eine Gleichrichterbrücke 44 ist zwischen den Leitungen 28 und 30 in der dargestellten Weise angeschlossen. Ihr negativer Ausgang 46 ist an Masse (GND) gelegt, und ihr positiver Ausgang 48 ist über einen NTC-Widerstand 50 mit einer Zwischenkreisleitung (dc link) 52 verbunden, über die der Motor 10 direkt mit einer pulsierenden Gleichspannung von z.B. + 320 V versorgt wird, falls die Wechselspannung zwischen den Leitungen 28 und 30 220 V beträgt. Naturgemäß kann sie auch niedriger sein, z.B. 117 V, und die pulsierende Gleichspannung hat dann ebenfalls einen niedrigeren Wert. Ein Kondensator 54 ist zwischen Masse 46 und Zwischenkreisleitung 52 angeschlossen, um die dort anliegende Gleichspannung zu glätten. Der NTC-Widerstand 50 begrenzt den Einschaltstrom.

Zur Begrenzung von Überspannungen zwischen den Leitungen 28 und 30 dient gemäß Fig. 2 ein Varistor 56. Die Wechselspannung wird auch der Primärwicklung 58 eines Transformators 60 zugeführt, dessen Sekundärwicklung 61 eine Spannung von etwa 12 V liefert, die durch eine Gleichrichterbrücke 64 gleichgerichtet wird. Über einen Widerstand 66 und eine Zenerdiode 68 (Fig. 2) wird diese Gleichspannung auf 12 V konstantgehalten und wird, wie dargestellt, durch einen Kondensator 70 gefiltert. Die Gleichspannung von z.B. 12 V liegt also zwischen einer Leitung 72 und Masse 46 (GND). Die Leitung 72 ist mit Sensor 16 und Kommutierungsschaltung 18 verbunden und versorgt beide mit Niederspannung.

Mit 62 ist eine Netzüberwachung bezeichnet, welche die Spannung U_{ZK} an der Leitung 52 und die Gleichspannung (z.B. + 12 V) an der Leitung 72 überwacht. Der Grund hierfür ist folgender: Beim Einschalten der in Fig. 1 dargestellten Anordnung, also dem Zuführen von Netzspannung zu den Klemmen 28 und 30, baut sich die Spannung U_{ZK} (an der Leitung 52) sehr rasch auf, während es länger dauert, bis sich die Gleichspannung an der Leitung 72 aufgebaut hat, welche den Hallgenerator 16 und die Kommutierungssteuerung 18 mit Energie versorgt.

Deshalb wäre - ohne die Netzüberwachung 62 - der Schaltzustand der Endstufe 12 nicht eindeutig definiert. Da die Endstufe 12 bevorzugt eine Vollbrückenschaltung ist, vgl. Fig. 3, könnte dieser nicht eindeutig definierte Schaltzustand zu einem Kurzschluß in dieser Brücke führen.

Ein analoges Problem ergibt sich beim Abschalten der dargestellten Anordnung vom Netz. Auch hier wird die Gleichspannung an der Leitung 72 wesentlich rascher zu Null als die Spannung U_{ZK} an der Leitung 52, denn beim Abschalten dreht sich der Rotor 14 weiter und liefert solange generatorisch Energie an den Zwischenkreis 46, 52 zurück, bis der Rotor 14 steht. Deshalb sinkt U_{ZK} proportional zur Drehzahl des Motors 10, und auch hier kann es - ohne die Netzüberwachung 62 - zu einem Kurzschluß in der Vollbrückenschaltung (in der Endstufe 12) oder zu einer Spannungsüberhöhung an der Endstufe 12 kommen, welche diese ebenfalls gefährdet.

Die Netzüberwachung 62 erfaßt also die Spannung U_{ZK} an der Leitung 52, und die Spannung an der Leitung 72. Wenn letztere zu niedrig wird, und U_{ZK} oberhalb eines vorgegebenen Wertes liegt, bewirkt die Netzüberwachung 62, daß der Leitung 72 eine Gleichspannung zugeführt wird, z.B. aus einem hierfür vorgesehenen Akkumulator (nicht dargestellt), oder mittels eines Spannungsreglers 76 von der Leitung 52. Dies ist in Fig. 2 dargestellt und wird nachfolgend beschrieben.

Auf diese Weise wird die Kommutierung des Motors 10 durch die Kommutierungssteuerung 18 direkt ab dem Einschalten gewährleistet, ebenso nach dem Ausschalten bis zum Stillstand des Rotors 14.

Zusätzlich zu Transformator 60 und Gleichrichter 64 ist gemäß Fig. 2 eine zweite Niederspannungs-Stromversorgung 76 vorgesehen, die an die Zwischenkreisleitung 52 angeschlossen ist. Sie ist bevorzugt als sogenannter Längsregler ausgebildet und enthält hierzu einen npn-Regeltransistor 78, dessen Kollektor über einen Widerstand 80 mit der Zwischenkreisleitung 52 verbunden ist. Sein Emitter ist mit der Leitung 72 direkt verbunden. Seine Basis ist über einen Widerstand 82 mit der Leitung 52 verbunden, ebenso über eine Zenerdiode 83 (z.B. 8,1 V) mit Masse (GND). Da die Zenerspannung von 8,1 V deutlich unter der Gleichspannung von 12 V liegt, die im Betrieb an der Leitung 72 liegt, bleibt der Regeltransistor 78 im normalen Betrieb des Motors 10 gesperrt, so daß keine Verluste an ihm und dem Widerstand 80 entstehen. Der Transistor 78 arbeitet als Emitterfolger.

Wird die in Fig. 1 und 2 dargestellte Anordnung vom Wechselstromnetz abgeschaltet, so daß die Spannung an der Leitung 72 unter 8,1 V sinkt, so wird der Regeltransistor 78 leitend, und die Leitung 72 wird jetzt über den Widerstand 80 und den Transistor 78 aus der Zwischenkreisleitung 52 gespeist, so daß auch in diesem Fall der Sensor 16 und die Kommutierungssteuerung 18 solange von der Zwischenkreisleitung 52 aus mit Strom versorgt werden, wie sich der Rotor 14 dreht und der Motor 10, der jetzt als Generator wirkt, die Zwischenkreisleitung 52 mit Strom versorgt.

Dies hat den Vorteil, daß sowohl direkt nach dem Einschalten des Motors 10, wie nach seinem Ausschalten, die Schaltzustände der Brückenschaltung 12 stets eindeutig definiert sind, solange an der Zwischenkreisleitung 52 eine Gleichspannung liegt. Da Transistor 78 und Widerstand 80 stets nur kurzzeitig belastet werden, nämlich direkt nach dem Einschalten des Motors 10 (solange die Spannung an der Leitung 72 noch nicht die gewünschte Höhe erreicht hat) und nach seinem Ausschalten bis zu dem Zeitpunkt, an dem der Rotor 14 zum Stillstand kommt, müssen diese Bauteile nur für eine kurzzeitige Belastung ausgelegt werden und beeinträchtigen den Wirkungsgrad des Motors nicht.

Fig. 3 zeigt beispielhaft eine Vollbrückenschaltung 12 mit vier N-Kanal-MOSFET-Transistoren 100, 102, 104 und 106 in Form einer H-Brücke. Zu diesen Transistoren sind jeweils Freilaufdioden 100' bis 106' in der dargestellten Weise antiparallel geschaltet. In der Diagonalen der H-Brücke 12 liegt der einzige Strang 11 des Motors 10. Naturgemäß eignet sich die Erfindung in gleicher Weise für Motoren mit mehreren Strängen, z.B. für dreisträngige Motoren mit einer entsprechenden Vollbrückenschaltung, wobei dann eine größere Zahl von Hallgeneratoren verwendet werden muß. Bei einem einsträngigen, zweipulsigen Motor (wie dargestellt) genügt ein einziger Hallgenerator 16, der in Fig. 3 nur schematisch angedeutet ist und der vom Magnetfeld des Rotormagneten 14 gesteuert wird.

Die H-Brücke 12 ist zwischen der Leitung 52 (z.B. +320 V) und Masse 46 (GND) angeordnet. Die Brücke 12 würde zerstört, wenn gleichzeitig die Transistoren 100 und 104, oder gleichzeitig die Transistoren 102 und 106 eingeschaltet würden. Um dies zu verhindern, muß die Kommutierungssteuerung 18 über die Leitung 72 ständig mit einer Betriebsspannung versorgt werden, solange an der Zwischenkreisleitung 52 eine positive Spannung anliegt, damit immer nur die Transistoren 100 und 106, oder 102 und 104, gleichzeitig eingeschaltet werden können und jeweils das andere Transistorpaar gesperrt ist.

Zur Ansteuerung der oberen Brückentransistoren 100, 102 dienen Optokoppler 110 bzw. 112. Wenn einer dieser Optokoppler an seinem Eingang einen Strom von der Kommutierungssteuerung 18 erhält, leuchtet die Diode in ihm und macht den Transistor an seinem Ausgang leitend, so daß das Gate des betreffenden MOSFET ein niedriges Potential erhält und dieser sperrt. Erhält der Optokoppler keinen Strom an seinem Eingang, so wird der zugeordnete MOSFET 100 oder 102 leitend, weil über den zugeordneten Kondensator 114 bzw. 116 und den zugeordneten Widerstand 118 bzw. 120 sein Gate ein entsprechendes Signal erhält, das ihn leitend macht.

Die beiden unteren MOSFETs 104, 106 werden über die UND-Glieder 24 bzw. 22 gesteuert. Wenn der Ausgang des UND-Glieds 24 niedrig ist, wird der MOSFET 104 gesperrt. Analoges gilt für das UND-Glied 22 und den MOSFET 106.

Die UND-Glieder 22, 24 haben jeweils zwei Eingänge a und b. Nur wenn beide Eingänge das Potential H (= hoch) haben,ist auch der Ausgang hoch, und der betreffende MOSFET wird leitend gesteuert, also eingeschaltet.

Durch ein niedriges Signal vom Ausgang 20 der Kommutierungssteuerung 18 können beide UND-Glieder 22, 24 gleichzeitig auf ein niedriges Signal an ihrem Ausgang umgeschaltet werden, wodurch beide MOSFETs 104, 106 gleichzeitig gesperrt werden und der Motor 10 stromlos wird. Auf diese Weise kann z.B. die Drehzahl geregelt oder der Motorstrom auf einen Maximalwert begrenzt werden.

Nach dem Abschalten des Motors 10 liefert dieser über die Freilaufdioden 100', 102', 104' und 106' Energie an die Zwischenkreisleitung 52 zurück, so daß dort eine Spannung U_{ZK} aufrechterhalten wird, die mit sinkender Drehzahl des Motors 10 abnimmt. Diese Spannung versorgt über den Längsregler 76 die Elektronik des Motors 10 so lange mit Spannung, wie sich dieser Motor noch dreht, so daß die MOSFETs 100, 102, 104, 106 auch in diesem Fall korrekt gesteuert werden, und kein Kurzschluß in der Brücke 12 entstehen kann. Dasselbe gilt beim Einschalten des Motors 10 solange, bis an der Leitung 72 über den Gleichrichter 64 die Betriebsspannung von z.B. +12 V aufgebaut ist.

Für das Netzteil 76 können beliebige Schaltungen verwendet werden, die aus einer hohen Gleichspannung eine niedrige Gleichspannung erzeugen. Die dargestellte Schaltung mit einem Längsreglertransistor 78 ist sehr einfach und hat den Vorteil, daß sie gleichzeitig auch die Funktion der Spannungsüberwachung 62 (Fig. 1) übernimmt, also sich im normalen Betrieb selbsttätig abschaltet und immer nur kurzzeitig während des Ein- bzw. Ausschaltens des Motors 10 wirksam wird. Für den Regeltransistor 78 muß ein spannungsfester Transistor verwendet werden.

Naturgemäß sind im Rahmen der vorliegenden Erfindung vielfache Abwandlungen und Modifikationen möglich.

## Patentansprüche

1. Anordnung mit einem elektronisch kommutierten Motor (10), welcher einen permanentmagnetischen Rotor (14) aufweist und im Betrieb aus einem Wechselstromnetz (28, 30) über einen an dieses Wechselstromnetz angeschlossenen Gleichrichter (44) und einen an diesen Gleichrichter angeschlossenen Gleichstrom-Zwischenkreis (46, 52) mit einer Gleichspannung versorgt wird,
mit einer aus dem Wechselstromnetz gespeisten Anordnung (60, 64, 66, 68, 70) zur Versorgung der Elektronik (16, 18) des Motors (10), welche an ihrem Ausgang (72, 46) eine Gleichspannung liefert, die niedriger ist als die Spannung am Gleichstrom-Zwischenkreis (46, 52),
und mit einem an den Gleichstrom-Zwischenkreis angeschlossenen Längsregler (76) zur alternativen Stromversorgung der Elektronik (16, 18) des Motors (10), welcher Längsregler (76) einen als variabler Widerstand betriebenen Regeltransistor (78) aufweist, der bei normaler Spannung am genannten Ausgang (72, 46) gesperrt ist und bei zu niedriger Spannung aktiviert wird, um eine Energieversorgung der Elektronik (16, 18) aus dem Gleichstrom-Zwischenkreis (46, 52) zu ermöglichen.

2. Anordnung nach Anspruch 1, bei welcher die Anordnung zur Versorgung der Elektronik (16, 18) des Motors (10) einen Transformator (60) aufweist, welcher diese Anordnung vom Wechselstromnetz (28, 30) trennt.

3. Anordnung nach Anspruch 2, bei welcher die Ausgangsspannung des Längsreglers (76) im Betrieb kleiner ist als die Ausgangsspannung der über den Transformator (60) gespeisten Anordnung (64, 66, 68, 70).

4. Anordnung nach Anspruch 2 oder 3, bei welcher der Regeltransistor (78) des Längsreglers (76) durch eine bei Energiezufuhr aus dem Wechselstromnetz (28, 30) auftretende Differenz zwischen seinem Basispotential und seinem Emitterpotential gesperrt wird, wobei sein Emitter an einen Ausgang (72) der über den Transformator (60) gespeisten Anordnung angeschlossen und seine Basis auf einem kostanten Bezugspotential (Z-Diode 83) gehalten ist.

5. Anordnung nach einem oder mehreren der Ansprüche 1 bis 4, bei welcher der Gleichstrom-Zwischenkreis (46, 52) und die niedrige Gleichspannung am genannten Ausgang (46, 72) ein gemeinsames Massepotential (46) aufweisen.

6. Anordnung nach einem oder mehreren der vorhergehenden Ansprüche, bei welcher der elektronisch kommutierte Motor (10) mindestens einen Wicklungsstrang (11) aufweist, der über eine Halbleiter-Vollbrückenschaltung (12) an den Gleichstrom-Zwischenkreis (52) angeschlossen ist.

7. Anordnung nach Anspruch 6, bei welchem die Halbleiter-Vollbrückenschaltung (12) MOSFETs (100, 102, 104, 106) als Leistungshalbleiter aufweist.

8. Anordnung nach Anspruch 6 oder 7, bei welcher die auf der spannungsführenden Seite der Vollbrückenschaltung (12) angeordneten Halbleiterschalter (100, 102) über Optokoppler (110, 112) gesteuert sind.

9. Anordnung nach einem oder mehreren der Ansprüche 6 bis 8, bei welcher zu Halbleiterschaltern (100, 102, 104, 106) der Vollbrückenschaltung (12) Freilaufdioden (100', 102', 104', 106') antiparallel geschaltet sind, um einen generatorischen Betrieb des Motors (10) zu ermöglichen.

## Claims

1. Arrangement with an electronically commutated motor (10) which exhibits a permanent magnet rotor (14) and in operation is supplied with a direct-current voltage from an alternating-current mains supply (28, 30) via a rectifier (44) connected to this alternating-current mains supply and a direct-current intermediate circuit (46, 52) connected to this rectifier,
with an arrangement (60, 64, 66, 68, 70) fed from the alternating-current mains supply to supply the electronics (16, 18) of the motor (10), which arrangement supplies at its output (72, 46) a direct-current voltage which is lower than the voltage at the direct-current intermediate circuit (46, 52),
and with a series controller (76) connected to the direct-current intermediate circuit for the alternative power supply to the electronics (16, 18) of the motor (10), which series controller (76) exhibits a control transistor (78) operated as a variable resistor which is switched off when the voltage at the named output (72, 46) is normal and is activated when the voltage is too low in order to allow a supply of power to the electronics (16, 18) from the direct-current intermediate circuit (46, 52).

2. Arrangement according to claim 1, in which the arrangement for supplying the electronics (16, 18) of the motor (10) exhibits a transformer (60) which isolates this arrangement from the alternating-current mains supply (28, 30).

3. Arrangement according to claim 2, in which the output voltage of the series controller (76) in operation is smaller than the output voltage of the arrangement (64, 66, 68, 70) fed via the transformer (60).

4. Arrangement according to claim 2 or 3, in which the control transistor (78) of the series controller (76) is switched off by a difference occurring in the power supply from the alternating-current mains supply (28, 30) between its base potential and its emitter potential, whereby its emitter is connected to an output (72) of the arrangement fed via the transformer (60) and its base is kept at a constant reference potential (zener diode 83).

5. Arrangement according to one or more of claims 1 to 4, in which the direct-current intermediate circuit (46, 52) and the low direct-current voltage at the named output (46, 72) exhibit a common ground potential (46).

6. Arrangement according to one or more of the preceding claims, in which the electronically commutated motor (10) exhibits at least one phase winding (11) which is connected to the direct-current intermediate circuit (52) via a semiconductor full-bridge circuit (12).

7. Arrangement according to claim 6, in which the semiconductor full-bridge circuit (12) exhibits MOSFETs (100, 102, 104, 106) as power semiconductors.

8. Arrangement according to claim 6 or 7, in which the semiconductor switches (100, 102) arranged on the live side of the full-bridge circuit (12) are controlled by means of optocouplers (110, 112).

9. Arrangement according to one or more of claims 6 to 8, in which freewheeling diodes (100', 102', 104', 106') are connected antiparallel to the semiconductor switches (100, 102, 104, 106) of the full-bridge circuit (12) in order to allow operation of the motor (10) as a generator.

## Revendications

1. Dispositif équipé d'un moteur (10) commuté électroniquement, qui présente un rotor (14) à magnétisme permanent et est alimenté en service avec une tension continue à partir d'un réseau de courant alternatif (28, 30) au moyen d'un redresseur (44) raccordé à ce réseau de courant alternatif et d'un circuit intermédiaire à courant continu (46, 52) raccordé à ce redresseur, d'un dispositif (60, 64, 66, 68, 70) alimenté à partir du réseau de courant alternatif pour l'alimentation de l'électronique (16, 18) du moteur (10), qui fournit à sa sortie (72, 46) une tension continue qui est inférieure à la tension sur le circuit intermédiaire à courant continu (46, 52), et d'un régulateur longitudinal (76) raccordé au circuit intermédiaire à courant continu pour l'alimentation alternative en courant de l'électronique (16, 18) du moteur (10), lequel régulateur longitudinal (76) présente un transistor de réglage (78) exploité comme résistance variable, qui est bloqué avec une tension normale à la sortie (72, 46) citée et est activée dans le cas d'une tension trop faible, afin de permettre une alimentation en énergie de l'électronique (16, 18) à partir du circuit intermédiaire à courant continu (46, 52).

2. Dispositif selon la revendication 1, sur lequel le dispositif pour l'alimentation de l'électronique (16, 18) du moteur (10) présente un transformateur (60) qui sépare ce dispositif du réseau de courant alternatif (28, 30).

3. Dispositif selon la revendication 2, sur lequel la tension de sortie du régulateur longitudinal (76) en service est inférieure à la tension de sortie du dispositif (64, 66, 68, 70) alimenté par le transformateur (60).

4. Dispositif selon la revendication 2 ou 3, sur lequel le transistor de réglage (78) du régulateur longitudinal (76) est bloqué par une différence entre son potentiel de base et son potentiel d'émetteur qui apparaît en cas d'arrivée d'énergie par le réseau de courant alternatif (28, 30), son émetteur étant raccordé à une sortie (72) du dispositif alimenté par le transformateur (60) et sa base étant maintenue sur un potentiel de référence constant (diode de Zener 83).

5. Dispositif selon l'une quelconque ou plusieurs des revendications 1 à 4, sur lequel le circuit intermédiaire de courant continu (46, 52) et la faible tension continue présentent à la sortie (46, 72) citée un potentiel de masse (46) commun.

6. Dispositif selon l'une quelconque ou plusieurs des revendications précédentes, sur lequel le moteur (10) commuté électroniquement présente au moins une branche d'enroulement (11), qui est raccordée au circuit intermédiaire du courant continu (52) au moyen d'un circuit de pont intégral à semi-conducteurs (12).

7. Dispositif selon la revendication 6, sur lequel le circuit de pont intégral à semi-conducteurs (12) présente des transistors à effet de champ du type MOS (100, 102, 104, 106) comme semi-conducteurs de puissance.

8. Dispositif selon la revendication 6 ou 7, sur lequel les commutateurs semi-conducteurs (100, 102) disposés sur le côté sous tension du circuit de pont intégral (12) sont commandés par des optocoupleurs (110, 112).

9. Dispositif selon l'une quelconque ou plusieurs des revendications 6 à 8, sur lequel des diodes de roue libre (100', 102', 104' ou 106') sont branchées de façon antiparallèle par rapport à des commutateurs semi-conducteurs (100, 102, 104, 106) du circuit de pont intégral (12), afin de permettre un fonctionnement par générateur du moteur (10).
